# FASCICULE DE BREVET EUROPEEN

(11) **EP 2 984 723 B1**
(45) Date de publication et mention de la délivrance du brevet: **30.06.2021**
(21) Numéro de dépôt: 14723460.3
(22) Date de dépôt: 09.04.2014
(51) Int. Cl.: H02J 3/00

(54) **FOURNITURE DÉCENTRALISÉE D'ÉNERGIE ÉLECTRIQUE**
DEZENTRALISIERTE ELEKTRIZITÄTSERZEUGUNG
DECENTRALISED SUPPLY OF POWER

(30) Priorité: 09.04.2013 FR 1353190
(43) Date de publication de la demande: 17.02.2016
(73) Titulaire: ORANGE, 75015 Paris (FR)
(72) Inventeur: LAMER, Bastien, F-92190 Meudon (FR)
(86) Numéro de dépôt international: PCT/FR2014/050851
(87) Numéro de publication internationale: WO 2014/167246

(56) Documents cités:
- EP-A1- 1 986 303
- CN-B- 101 453 446
- None

## Description

La présente invention concerne le domaine de la distribution d'énergie électrique entre installations terminales, et en particulier la distribution d'énergie électrique dans un contexte décentralisé, en réutilisant des mécanismes de négociation propres aux ressources de télécommunications.

Le transport d'énergie électrique et la transmission de données utilisent habituellement deux réseaux distincts dont les architectures, très hiérarchisées, différent substantiellement.

D'un côté, le réseau de transport d'un fournisseur d'énergie électrique permet de délivrer cette énergie électrique jusqu'à un point de terminaison, que ce soit un équipement ou une résidence, à partir d'un centre de production (e.g. centrale électrique), sur sollicitation du point de terminaison.

Ce type de système est naturellement sujet à des pénuries d'énergie (« black out »), car l'énergie électrique y est délivrée sans contrôle d'admission. En outre, un tel réseau de transport est centralisé et ne permet pas l'échange d'énergie localement et directement entre les points de terminaison, alors que ces derniers peuvent très bien être eux-mêmes producteurs d'énergie électrique (c'est le cas par exemple de bâtiments disposant de moyens d'énergie renouvelable ou d'un parc de batteries électriques). De plus en plus de constructions neuves de ce type sont dites à énergie positive, c'est-à-dire qu'elles produisent en moyenne plus d'énergie (électricité, chaleur) qu'elles n'en consomment.

Du côté des réseaux de télécommunications, comme par exemple décrit dans le document EP 1986 303, existe des systèmes de télé-alimentation dans lesquels des équipements terminaux sont alimentés électriquement par un réseau de télécommunication. Cependant, ces systèmes se révèlent relativement statiques et ne permettent pas la négociation de fourniture d'énergie électrique entre points de terminaison du réseau de télécommunications, ni a fortiori le transport d'énergie électrique entre points de terminaison qui se sont mis d'accord entre eux au terme d'une telle négociation.

La présente invention telle que décrite dans les revendications jointes, vise donc à répondre aux inconvénients de l'art antérieur et propose à cet effet un procédé de fourniture d'énergie électrique au moyen d'un équipement de commutation connecté à une pluralité d'installations par l'intermédiaire de câbles aptes à transporter de l'énergie électrique, le procédé comprenant les étapes suivantes :
raccorder un des câbles, connecté à une des installations dite demandeuse, à au moins un autre des câbles, connecté à une autre des installations dite fournisseuse, au moyen de l'équipement de commutation, en fonction d'au moins un message de négociation, conforme à un protocole de signalisation de télécommunications, échangé entre des équipements gestionnaires d'énergie installés dans les installations demandeuse et fournisseuse ; et
transporter une quantité d'énergie électrique, de la au moins une installation fournisseuse vers l'installation demandeuse, par l'intermédiaire des câbles raccordés au moyen de l'équipement de commutation.

Il est ainsi possible de commander le routage d'une énergie électrique à livrer, directement entre plusieurs installations, en fonction d'une négociation entre ces installations et de transporter cette énergie entre ces installations, de manière locale et décentralisée. Ce routage peut être automatisé et implémenté de manière simple, sans modification substantielle au niveau du réseau de distribution électrique, en réutilisant un protocole de signalisation déjà existant sur le réseau de télécommunications.

Selon un mode de réalisation dans lequel le message de négociation est un message de réponse de ladite au moins une installation fournisseuse à une requête de fourniture d'électricité émanant de l'installation demandeuse, le procédé comprend en outre l'interception, dans un module de contrôle, du message de réponse et, lorsque ce message de réponse est positif, le déclenchement du raccordement des câbles connectés à l'installation demandeuse et l'installation fournisseuse.

Ceci permet à un opérateur tiers de contrôler le routage décentralisé de l'énergie électrique à livrer, en tenant compte prioritairement de ses propres contraintes, ainsi qu'éventuellement des contraintes de l'opérateur partenaire du réseau de distribution électrique supportant ce routage, par rapport aux contraintes de l'utilisateur final de l'installation demandeuse, à partir des informations transmises dans les réponses provenant des installations pouvant fournir de l'énergie électrique. L'opérateur tiers peut alors refuser la commutation s'il considère que la demande en énergie électrique est trop importante pour que le réseau locale puisse la transmettre, tel un administrateur système.

Dans un mode de réalisation où ce module de contrôle est situé dans un réseau de télécommunications, le procédé comprend en outre, suite à l'interception du message de réponse et lorsque le message de réponse est positif, l'envoi par l'équipement de contrôle de signalisation d'une requête de commutation vers l'équipement de commutation afin de déclencher le raccordement des câbles connectés à l'installation demandeuse et l'installation fournisseuse. Ainsi, l'opérateur du réseau de télécommunications sur lequel se négocie la livraison d'énergie électrique peut contrôler le routage de l'énergie électrique, en tenant compte prioritairement de ses propres contraintes ainsi qu'éventuellement des contraintes de l'opérateur partenaire du réseau de distribution électrique supportant ce routage, par rapport aux contraintes de l'utilisateur de l'installation demandeuse. En outre, le contrôle du commutateur peut être effectué de manière sécurisé, grâce à un équipement installé dans le réseau de télécommunications, pour se prémunir d'un « hacking » potentiel du commutateur.

Dans un autre mode de réalisation où le module de contrôle et l'équipement de commutation sont intégrés dans un équipement de connexion, le procédé comprend en outre, suite à l'interception du message de réponse et lorsque ledit message de réponse est positif, le contrôle de l'équipement de commutation par le module de contrôle en fonction du message de réponse positif, afin de déclencher le raccordement des câbles connectés à l'installation demandeuse et l'installation fournisseuse. Ceci permet de gérer entièrement le routage d'électricité au niveau d'un équipement de connexion, situé avantageusement à proximité des installations, sans introduire de signalisation supplémentaire dans le réseau de télécommunications.

Selon un autre mode de réalisation où le message de négociation est une requête de commutation, émis par l'équipement gestionnaire électrique de l'installation demandeuse après avoir reçu un message de réponse positif d'au moins une installation fournisseuse à une requête de fourniture d'électricité de l'installation demandeuse, le procédé comprend l'envoi de la requête de commutation, de l'installation demandeuse vers l'équipement de commutation, afin de déclencher le raccordement des câbles connectés à l'installation demandeuse et l'installation fournisseuse. Ici, le raccordement entre deux installations demandeuse et fournisseuse ne se fait qu'à l'issue de la négociation entre ces deux installations, et sur ordre de l'installation demandeuse, qui peut donc privilégier prioritairement ses propres contraintes en termes de plage horaire et de tarification. Ceci permet donc une gestion complètement décentralisée et ouverte de la fourniture d'énergie électrique entre utilisateurs terminaux.

En outre, le protocole de signalisation de télécommunications est le protocole SIP. Ce protocole SIP est en effet conçu pour la négociation de ressources de transmission entre terminaux et propose tout une palette de messages adapté à ce type de négociation, il peut être facilement réemployé pour déclencher la commutation de câbles de transport électrique dans le cadre de la négociation de ressources énergétiques.

La présente invention propose en outre un équipement de connexion apte à être connecté à une pluralité de câbles, respectivement aptes à transporter de l'énergie électrique vers une installation, comprenant un commutateur connecté aux câbles, ce commutateur étant configuré pour raccorder un des câbles, connecté à une installation dite demandeuse, à au moins un autre des câbles, connecté à au moins une installation dite fournisseuse, en fonction d'au moins un message de négociation, conforme à un protocole de signalisation de télécommunications, échangé entre des équipements gestionnaires d'énergie installés dans lesdites installations demandeuse et fournisseuse. Un tel équipement permet le routage décentralisé d'énergie électrique à livrer, directement entre plusieurs installations, en fonction d'une négociation mise en place entre ces installations.

Selon une caractéristique avantageuse, l'équipement de connexion comprend en outre une interface de communication apte à recevoir une requête de commutation, générée en fonction du message de négociation, et configurée pour contrôler le commutateur en fonction de cette requête de commutation de sorte à raccorder les câbles connectés aux installations demandeuse et fournisseuse. Il est ainsi possible de contrôler à distance le routage décentralisé de l'énergie électrique à livrer entre installations, ce qui est particulièrement adapté à un contexte où le réseau de distribution électrique est distinct du réseau de télécommunications sur lequel se déroule la négociation entre installations.

Selon une caractéristique avantageuse, l'équipement de connexion comprend en outre un module de contrôle apte à intercepter le au moins un message de négociation et configuré pour contrôler le commutateur en fonction du message de négociation de sorte à raccorder les câbles connectés aux installations demandeuse et fournisseuse. Il est ainsi possible de contrôler directement, au niveau de l'équipement de connexion lui-même, le routage décentralisé de l'énergie électrique à livrer entre installations, ce qui est particulièrement adapté à un contexte où le réseau de distribution électrique se confond avec le réseau de télécommunications sur lequel se déroule la négociation entre installations.

La présente invention propose en outre un système de livraison d'énergie électrique comprenant :
une pluralité d'installations comprenant une installation, dite demandeuse, et au moins une autre installation, dite fournisseuse, ces installations comprenant chacune un équipement gestionnaire d'énergie, apte à échanger au moins un message de négociation d'énergie électrique avec un autre équipement gestionnaire d'énergie ; et
un équipement de connexion tel que décrit ci-avant, connecté respectivement à chacune des installations par l'intermédiaire de câbles aptes à transporter de l'énergie électrique.

Selon une caractéristique avantageuse, le système de livraison comprend en outre une pluralité de lignes de transmission connectant respectivement les équipements gestionnaires d'énergie à un équipement de contrôle de signalisation configuré pour gérer l'échange de messages de signalisation entre les équipement gestionnaires d'énergie. Un tel système permet d'utiliser une boucle locale d'un réseau de télécommunications pour mettre en œuvre localement la négociation de ressources électriques aboutissant au contrôle du routage de la livraison décentralisée d'énergie électrique.

Dans un mode de réalisation, les câbles aptes à transporter de l'énergie électrique sont des lignes de transmission appariées dans un réseau de télécommunications avec les lignes de transmission connectant les équipements gestionnaires d'énergie à l'équipement de contrôle de signalisation. Il est ainsi possible d'utiliser une boucle locale multi-ligne d'un réseau de télécommunications aussi bien pour la négociation de l'énergie électrique à livrer localement que pour son transport, et ce de manière complètement décentralisée, tout en dissociant les lignes dédiées à la négociation des lignes dédiées au transport proprement dit afin de cloisonner ces fonctionnalités. Ceci permet notamment de réaffecter au transport d'électricité des boucles locales d'un réseau de télécommunications déjà installées, et devenues inutiles par exemple suite au déploiement d'un réseau à fibre optique FTTH.

Dans un autre mode de réalisation, les câbles aptes à transporter de l'énergie électrique sont en outre aptes à transmettre ledit au moins un message de négociation entre les équipements gestionnaires d'énergie desdites installations demandeuse et fournisseuse. Il est ainsi possible d'utiliser une boucle locale mono-ligne d'un réseau de télécommunications ou de distribution électrique aussi bien pour la négociation de l'énergie électrique à livrer localement que pour son transport proprement dit, et ce de manière complètement décentralisée.

Selon une caractéristique particulière de ce dernier mode de réalisation, les câbles, aptes à transporter de l'énergie électrique et à transmettre ledit au moins un message de négociation, sont des lignes de transmission d'un réseau de télécommunications. Ceci permet d'utiliser une boucle locale d'un réseau de télécommunications et notamment de réaffecter au transport d'électricité des boucles locales d'un réseau de télécommunications déjà installées, et devenues inutiles par exemple suite au déploiement d'un réseau à fibre optique FTTH.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :

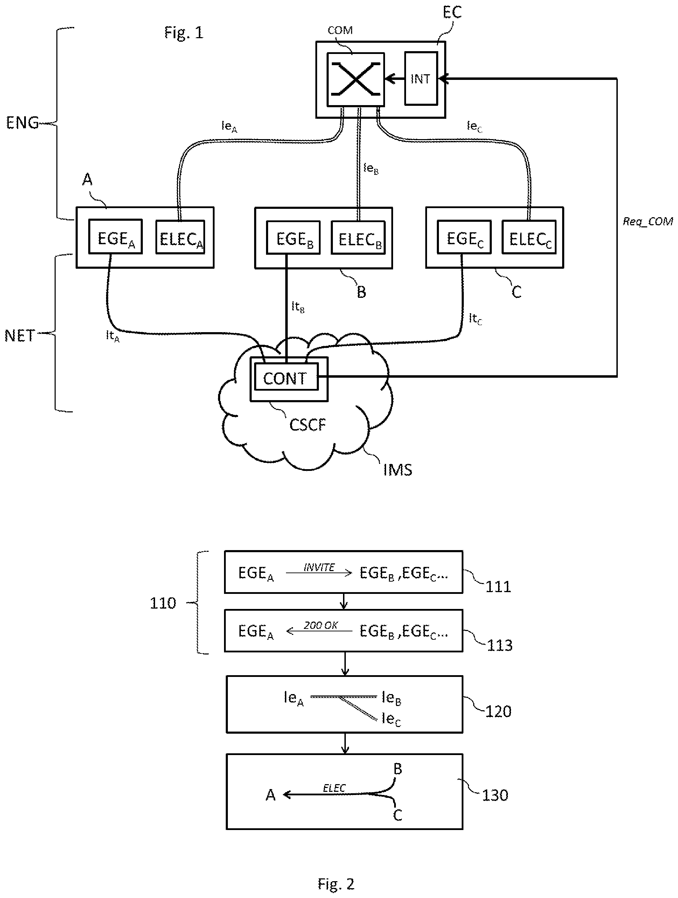

- la figure 1 illustre un système de livraison d'énergie électrique selon un premier mode de réalisation de l'invention, dans lequel un réseau de télécommunications et un réseau de distribution électrique distincts sont employés conjointement pour la fourniture décentralisée d'électricité ;
- la figure 2 illustre les étapes d'un procédé de fourniture d'énergie électrique selon un mode de réalisation de la présente invention ;

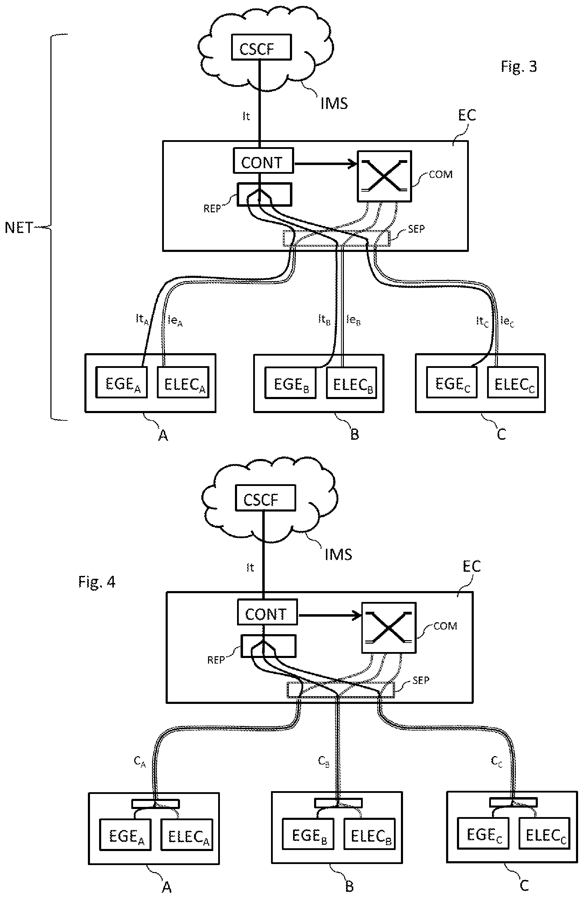

- la figure 3 illustre un système de livraison négociée d'énergie électrique selon un deuxième mode de réalisation de l'invention, dans lequel un réseau de télécommunications est utilisé aussi bien pour la négociation de ressources électriques entre installations que pour la livraison d'énergie électrique proprement dite ; et
- la figure 4 illustre un système alternatif de livraison négociée d'énergie électrique selon le deuxième mode de réalisation de l'invention dans lequel un réseau de télécommunications est utilisé aussi bien pour la négociation de ressources électriques entre installations que pour la livraison d'énergie électrique proprement dite.

On se réfère tout d'abord à la **figure 1** qui illustre un système de livraison d'énergie électrique selon un premier mode de réalisation de l'invention, dans lequel un réseau de télécommunications et un réseau de distribution électrique distincts sont employés conjointement pour la fourniture décentralisée d'électricité.

Ce système comprend d'une part un certain nombre d'installations pouvant fournir ou demander de l'énergie électrique. Trois installations A, B et C sont illustrées sur la figure 1, l'invention pouvant cependant s'appliquer à un nombre quelconque d'installations. Ces installations peuvent notamment être des habitations de particuliers, des bureaux ou des immeubles.

Chaque installation comprend un système électrique (ELEC_{A} pour l'installation A, etc.) qui se comporte soit comme une source d'énergie électrique, soit comme une entité consommatrice d'énergie électrique. Ainsi, parmi ces installations, certaines peuvent disposer d'un système électrique comprenant des moyens autonomes de génération d'énergie électrique (comme par exemple des panneaux solaires, des éoliennes ou autres) et de moyens de stockage d'énergie électrique (comme par exemple un parc de batterie électrique). Ces installations sont désignées ici comme étant « fournisseuses d'énergie électrique », car elles peuvent fournir tout ou partie de l'électricité qu'elles génèrent au réseau de transport d'électricité. D'autres installations peuvent, au contraire, disposer d'un système électrique requérant la livraison d'énergie électrique, afin d'alimenter certains équipements consommateurs d'électricité. De telles installations sont désignées ici comme étant « demandeuses d'énergie électrique ». Une même installation peut être fournisseuse ou demandeuse d'énergie électrique, en fonction de ses capacités génératrices comparées à sa consommation intrinsèque à un instant donnée.

Au sein de chaque installation se trouve en outre un équipement gestionnaire d'énergie (désigné par EGE_{A} pour l'installation A, etc.) servant notamment à négocier, avec les équipements gestionnaires d'énergie d'une ou plusieurs autres installations, des ressources d'énergie électrique ainsi que les conditions de leur fourniture, comme il sera vu plus loin. Cet équipement gestionnaire d'énergie EGE_{A} peut typiquement prendre la forme d'une passerelle domestique de télécommunications, modifiée (par exemple au moyen de l'installation d'un module logiciel complémentaire) pour permettre la négociation de ressources électriques. Alternativement, cet équipement gestionnaire d'énergie peut être implémenté sous forme d'une passerelle domotique (« home automation box ») ou bien prendre la forme d'un module indépendant communiquant ou non avec de telles passerelles.

Les installations A,B,C sont reliées, d'une part, à un équipement de connexion EC au sein d'un réseau de distribution d'énergie électrique ENG, par l'intermédiaire de câbles de transport d'énergie électrique (ici typiquement des câbles basse tension, mais aussi éventuellement des paires de cuivre télécoms comme il sera vu plus loin) désignés respectivement par Ie_{A}, Ie_{B} et Ie_{C}. Cet équipement de connexion EC peut notamment être un point de concentration d'une boucle locale d'un réseau électrique de distribution, laquelle permet l'alimentation des installations A,B,C à partir d'électricité de moyenne tension (40 kV) livrée par le réseau de transport d'un fournisseur d'électricité. L'équipement EC peut également être un point de concentration d'une boucle locale télécoms, qui permet la télé-alimentation d'équipements localisés dans la boucle locale ou chez le client.

Les installations A,B,C sont par ailleurs connectées entre elles dans un réseau de télécommunications NET, au moyen de leurs équipements gestionnaires d'énergie respectifs EGE_{A}, EGE_{B} et EGE_{C} qui peuvent communiquer entre eux par l'intermédiaire des lignes de transmission It_{A}, It_{B} et It_{C} connectées à un équipement de contrôle de signalisation, désigné par CSCF et situé dans une partie cœur du réseau NET, gérant l'échange de messages de signalisation entre ces équipements gestionnaires d'énergie, ces messages étant conformes à un protocole de signalisation supporté par le réseau de télécommunications NET et permettant la négociation de fourniture d'énergie électrique. Les échanges d'énergie entre fournisseur et demandeur peuvent découler des procédures suivantes (non exhaustives) :
1- L'installation demandeuse souscrit à un type d'énergie (montant, créneau, tarif par exemple) auprès d'un serveur rattaché à l'équipement CSCF (de type RLS « Resource List Server » par analogie avec l'architecture de présence) qui reçoit les propositions des fournisseurs (énergie excédentaire par exemple) et notifie le demandeur une fois l'énergie disponible. S'ensuit une négociation avec le fournisseur pour être certain que l'énergie est toujours disponible.
2- L'installation demandeuse récupère une liste de fournisseurs proches de son domicile auprès du serveur sur lequel les fournisseurs se sont inscrits et adresse une requête à chaque fournisseur en fonction de son besoin en énergie, chaque fournisseur adressé répond en fonction de ses disponibilités
3- L'installation demandeuse envoie une requête relative à son besoin en énergie au serveur qui dispose de la liste des fournisseurs à adresser (fonction par exemple de leur adresse et de leur capacité à répondre) et relaie donc via l'équipement CSCF la demande aux fournisseurs adéquats qui répondent en fonction de leur disponibilité
4- L'installation du fournisseur poste sur un serveur le type d'énergie qu'il souhaite mettre à disposition de demandeurs (montant en Watt, créneau, tarif par exemple). Dans ce cas l'installation demandeuse envoie sa requête au serveur seulement, via le CSCF puis négocie avec le(s) fournisseur(s) de son choix.

Cet équipement de contrôle de signalisation CSCF comprend notamment un module de contrôle CONT capable d'intercepter les messages de signalisation échangés entre les équipements gestionnaires d'énergie et d'en extraire les informations liées à la négociation de ressources électriques, afin de les analyser et d'en déduire une requête de commutation *reg_COM*destinée à déclencher à distance la connexion d'une installation fournisseuse avec une installation demandeuse en fonction de cette négociation. Cet équipement de contrôle de signalisation peut notamment être un module P-CSCF (« Proxy-Call Server Control Function ») installé au sein d'un cœur de réseau IMS du réseau de télécommunications NET, les messages échangés entre les équipements gestionnaires d'énergie des installations A,B,C respectant alors le protocole SIP habituellement utilisé dans ce type de réseau. Le module P-CSCF peut ainsi, suite à l'interception de la signalisation (et l'extraction de données utiles telles que le résultat de la négociation, les identités des demandeur/fournisseur, les caractéristiques de l'énergie à échanger) consulter une base de donnée afin d'établir les règles de mise en relation des équipements gestionnaires d'énergie. Cette base de donnée, que l'on peut nommer PCRF (Policy Control Resource Function), par analogie avec la fonction que l'on retrouve dans l'IMS, peut détenir des informations du type « coordonnées géographiques du module EC », « type de câbles à mettre en relation entre les équipements gestionnaires d'énergie, fonction de l'énergie à transmettre », « identifiants des ports physiques du commutateur à mettre en relation », « durée de mise en relation », ou toute autre information utile à l'établissement de la requête *req_COM.* Le module de contrôle CONT peut prendre la forme d'un programme comprenant des instructions de code installé au sein de l'équipement de contrôle de signalisation CSCF, lequel dispose alors d'une mémoire pour mémoriser ces instructions de code et d'un processeur pour exécuter un tel programme.

L'équipement de connexion EC comprend, d'une part, une interface de communication INT capable de recevoir la requête de commutation *req_COM* précitée, telle que générée par le module de contrôle CONT lorsque ce dernier détecte qu'une installation fournisseuse répond positivement à une requête d'une installation demandeuse. Cette interface de communication INT peut être une interface radio, permettant l'échange de messages avec le module de contrôle ou les équipements gestionnaires par l'intermédiaire d'un réseau sans fil, ou bien une interface filaire reliée au module de contrôle CONT par l'intermédiaire du réseau NET. La communication entre le module CONT dans le réseau NET et l'interface de communication INT peut être sécurisée au moyen d'un certificat, voire d'un cryptage de données, afin d'éviter qu'un tiers malveillant s'empare des ordres de commutations et des identifiants des câbles à raccorder, au sein de la requête *req_COM,* pour en détourner leur usage.

L'équipement de connexion comprend, d'autre part, un commutateur COM apte à connecter entre eux certains des câbles de transport Ie_{A}, Ie_{B} et Ie_{C}, et contrôlé, via l'interface de communication INT, en fonction de la réception d'une telle requête *req_COM* et de son contenu. En particulier, si cette requête *reg_COM* contient les identifiants de câbles raccordés à une installation fournisseuse et à une installation demandeuse (ou de ports physiques du commutateur), ainsi qu'une indication que ces câbles doivent être raccordés, le commutateur COM interprète une telle requête comme un ordre de raccordement des câbles identifiés dans cette requête.

On se réfère maintenant à la **figure 2** qui illustre les étapes d'un procédé de fourniture d'énergie électrique selon un mode de réalisation de la présente invention.

Ce procédé commence par une négociation entre installations (étape 110 de négociation) au cours de laquelle, au sein du réseau de télécommunications NET tel que décrit en figure 1, une installation dite « demandeuse d'énergie électrique » négocie avec une ou plusieurs installations dites « fournisseuses d'énergie électrique » une certaine quantité d'énergie électrique à fournir. Comme indiqué précédemment, cette négociation de ressources électriques est réalisée au moyen de l'échange de messages de négociation entre les équipements gestionnaires d'énergie des différentes installations, transmis sur les lignes de transmission dédiées à la transmission d'informations (e.g. les lignes It_{A} à It_{C} sur la figure 1). De tels messages sont conformes à un protocole de signalisation habituellement utilisé pour négocier des ressources de capacité de transmission (typiquement le protocole SIP) adaptés pour y introduire des informations relatives à des ressources d'énergie électrique.

Ainsi, dans le cas où l'installation A est une installation demandeuse d'énergie électrique et utilise le protocole SIP, l'équipement gestionnaire d'énergie EGE_{A} élabore un message de type « INVITE » et l'envoie aux équipements gestionnaires d'énergie d'un certain nombre d'installations fournisseuses d'énergie électrique, afin de notifier son besoin d'une certaine quantité d'énergie électrique . Ce message « INVITE » peut ainsi contenir un champ spécifique, inséré dans le corps de ce message élaboré selon le protocole SDP, dans lequel est insérée une information quant à la quantité d'énergie électrique souhaitée (par exemple 50 W) par l'installation demandeuse A.

Outre cette information relative à la quantité d'électricité souhaitée, ce champ spécifique peut contenir d'autres informations relatives aux conditions de livraison d'électricité souhaitées par l'installation demandeuse A, comme par l'exemple :
- une plage horaire dans laquelle l'installation demandeuse A souhaite obtenir cette quantité (par exemple entre 19h et 22h),
- une tension à laquelle l'installation demandeuse A souhaite recevoir cette énergie électrique (e.g. la tension maximale supportée par le système électrique ELEC_{A} et/ou le câble Ie_{A} de l'installation A)
- un tarif maximal défini par l'installation A pour la livraison de la quantité d'énergie électrique souhaitée.

Un message de requête « INVITE » tel que décrit ci-dessus est ainsi envoyé à un ou plusieurs autres équipements gestionnaire d'énergie (étape 111), situés dans des installations considérées comme étant fournisseuses d'énergie électriques, donc comme pouvant potentiellement fournir ce type d'énergie, par exemple les installations B et C de la figure 1.

Les adresses (e.g. adresses IP) des équipements gestionnaires d'énergie EGE_{B} et EGE_{C} destinataires de cette requête « INVITE » sont typiquement consignées dans une liste de contacts mémorisée dans l'équipement EGE_{A}, afin d'être utilisées pour envoyer automatiquement ces messages « SIP INVITE ». Alternativement, l'utilisateur de l'installation A peut utiliser une interface de cet équipement EGE_{A} pour lancer la négociation et l'envoi des messages « SIP INVITE », afin par exemple de réserver une certaine quantité d'énergie électrique pour un usage ultérieur. L'équipement EGE_{A} peut ainsi stocker une base de données comprenant un liste de contacts avec les adresses des installations fournisseuses d'énergie électrique, les tarifs pratiqués par ces installations pour livrer de l'électricité (reçus par exemple en réponse à une requête précédente ou dans un message de mise à jour), l'énergie effectivement consommée en provenance de chacune de ces installations fournisseuses et les tarifs réellement appliqués, ainsi que la quantité d'énergie électrique réservée auprès de chacune des installations fournisseuses pour un usage ultérieur.

Cette requête « INVITE » transite par la ligne de transmission It_{A} vers l'équipement de contrôle de signalisation CSCF du réseau NET, qui la redirige vers les équipements gestionnaires d'électricité destinataires EGE_{B} et EGE_{C}, via les lignes de transmission It_{B} et It_{C}, après avoir éventuellement procédé à l'authentification de l'équipement gestionnaire EGE_{A} et vérifié ses droits au service de fourniture décentralisée d'énergie électrique.

Une fois reçue cette requête « INVITE », l'équipement EGE_{B} peut y répondre, soit négativement en envoyant un message SIP de réponse de type 606 (« Not acceptable »), éventuellement associé à un warning code (de type 370, « insufficient bandwidth »), permettant par exemple à EGE_{A} de renégocier avec EGE_{B} un montant d'énergie plus faible, soit positivement (si l'installation B dispose effectivement d'une quantité d'électricité à fournir dans des conditions de livraison compatibles avec les contraintes de livraison indiquées dans la requête « INVITE ») en retournant (étape 113) à l'équipement EGE_{A} un message SIP de réponse de type « 200 OK » contenant un champ spécifique dans lequel est inséré, d'une part, la quantité d'énergie électrique que l'installation B peut effectivement fournir (par exemple 30 W, par rapport aux 50 W demandés), ainsi que d'autres informations relatives aux conditions de livraison d'énergie proposées par l'installation B, comme la plage horaire durant laquelle cette livraison est proposée (par exemple 19h-20h).

Un tel message de réponse positive « 200 OK » est alors routé vers l'équipement EGE_{A}, par l'intermédiaire de la ligne de transmission It_{B}, de l'équipement de contrôle de signalisation CSCF et de la ligne de transmission It_{A}. Le même échange de requête « INVITE » et de réponse « 200 OK » a lieu séparément entre le gestionnaire EGE_{A} et EGE_{C}.

L'échange de messages de requête « INVITE » et de messages de réponse « 200 OK » peut ainsi permettre à l'équipement EGE_{A} de recueillir des informations relatives aux conditions de livraison d'énergie offertes par différentes installations fournisseuses et de les comparer, afin par exemple de choisir, entre plusieurs installations pouvant offrir la quantité d'énergie électrique souhaitée, celle pratiquant le tarif le moins cher ou offrant de livrer cette énergie dans la plage horaire la plus compatible avec la plage horaire souhaitée pour l'installation A.

Cet échange de messages de négociation peut être renouvelé avec différentes installations fournisseuses d'énergie électrique jusqu'à ce que l'installation demandeuse A obtienne la quantité d'énergie électrique souhaitée. Dans l'exemple présent, après avoir obtenue une première réponse « 200 OK » proposant la fourniture de 30 W par l'installation B, la négociation peut se poursuivre avec l'envoi vers l'équipement gestionnaire d'énergie EGE_{C} d'un deuxième message « INVITE » requérant la livraison des 20 W manquants et se terminer avec la réception d'une deuxième réponse positive « 200 OK », provenant de l'équipement gestionnaire EGE_{C} et indiquant à l'équipement EGE_{A} que l'installation C est prête à lui livrer 20 W dans les conditions qu'il désire.

Dans un mode de réalisation, le module de contrôle CONT intercepte les messages de requête émis par l'équipement gestionnaire EGE_{A}, ainsi que les messages de réponse émis par les équipements gestionnaires EGE_{B} et EGE_{C}, et les mémorise dans une base de données, afin de garder une trace des négociations en cours entre ces installations.

Lorsqu'il intercepte le message positif « 200 OK » transmis par l'équipement EGE_{B}, le module de contrôle CONT en déduit qu'il faut connecter, au niveau du réseau de transport d'électricité, l'installation A avec l'installation B, et construit alors la requête de commutation *reg_COM* destinée au commutateur COM de l'équipement de connexion EC connectant ces deux installations. Cette requête *req_COM* peut prendre la forme d'un message dans lequel sont identifiés les deux câbles de transport d'électricité desservant ces installations A et B (i.e. les câbles Ie_{A} et Ie_{B}), en association avec un ordre de connexion de ces câbles (ou des ports physiques du commutateur), interprétable par le commutateur COM. Cette requête *req_COM* est alors transmise à l'équipement de connexion EC, où elle est reçue par l'interface de commutation INT afin de provoquer la connexion des câbles Ie_{A} et Ie_{B} par le commutateur COM. Une opération similaire peut être effectuée par la suite lorsque le module de contrôle CONT intercepte la deuxième réponse positive « 200 OK » émise par l'équipement gestionnaire EGE_{C}, de sorte à ce que la commutation des câbles, au niveau de l'équipement de connexion EC, soit faite au gré des réponses positives successives provenant des installations fournisseuses, sans intervention de la part de l'équipement gestionnaire EGE_{A}. Ainsi, dans ce mode de réalisation, c'est l'accord d'une installation fournisseuse qui est privilégié, par rapport aux souhaits de l'installation demandeuse, dans le processus de décision de commutation. L'installation demandeuse peut alors avoir à assurer le non-recouvrement des créneaux de transfert d'énergie par plusieurs installations fournisseuses, dans le cas où le commutateur ne pourrait pas raccorder son installation à plusieurs fournisseurs à la fois.

Dans un mode de réalisation alternatif, les réponses positives « 200 OK » des équipements gestionnaires EGE_{B} et EGE_{C} sont transmises vers l'équipement gestionnaire EGE_{A} sans que le module de contrôle CONT ne donne d'ordre au commutateur COM. L'équipement gestionnaire EGE_{A} utilise alors les informations transmises dans les réponses « 200 OK » pour accepter une des offres (voire les deux offres), ou éventuellement renvoyer une nouvelle requête « INVITE » pour poursuivre la négociation avec d'autres conditions. Si l'équipement gestionnaire EGE_{A} accepte au moins une des offres reçues (par exemple l'offre de livraison de 30 W émise par l'équipement gestionnaire EGE_{B}), cet équipement EGE_{A} construit la requête de commutation *req_COM* destinée au commutateur COM de l'équipement de connexion EC connectant l'installation A à cette installation B, de la manière décrite précédemment, et envoie cette requête de commutation vers cet équipement de connexion EC, où elle est reçue et traitée par l'interface de commutation INT. Ainsi, dans ce mode de réalisation alternatif, c'est l'accord final de l'installation demandeuse qui est privilégié, par rapport aux offres initiales des installations fournisseuses telles que transmises dans les messages de réponses positifs émis par ces dernières, dans le processus de décision de commutation.

Outre les messages « INVITE » et « 200 OK », d'autres messages conformes au protocole SIP peuvent être employés dans le cadre de cette phase de négociation. Ainsi, l'équipement gestionnaire électrique EGE_{A} peut envoyer un message « SUBSCRIBE/NOTIFY » à l'équipement EGE_{B}, ou à un serveur de type RLS qui recevrait les offres des fournisseurs via un message « PUBLISH », pour être averti de la disponibilité effective d'une quantité d'électricité. Un message « UPDATE » peut aussi être envoyé, de l'équipement EGE_{B} vers l'équipement EGE_{A} (ou le serveur RLS) afin d'informer ce dernier d'une modification d'un paramètre de livraison d'électricité de l'installation B, par exemple d'un changement de tarif ou de plage horaire de livraison, ce qui permet à l'équipement EGE_{A} (ou au serveur RLS) de mettre à jour ce paramètre dans sa base de données.

Lorsqu'une requête de commutation *req_COM,* émise soit par le module de contrôle CONT interceptant un message positif de réponse de type « 200 OK », soit par l'équipement EGE_{A} acceptant une offre de livraison proposée dans un tel message « 200 OK », est reçue par l'interface de communication INT de l'équipement de connexion EC, celui-ci procède alors (étape 120 de commutation) au raccordement des câbles de transport dédiés au transport d'énergie électrique, au moyen du commutateur COM. Ici, dans la mesure où les équipements gestionnaires EGE_{B} et EGE_{C} ont tous les deux répondu positivement avec des messages « 200 OK », le commutateur COM connecte entre eux les câbles Ie_{A},Ie_{B} et Ie_{C}, de manière simultanée comme sur la figure 2 (Ie_{A},Ie_{B} et Ie_{A},Ie_{C}) ou successive (ex. Ie_{A},Ie_{B} puis Ie_{A},Ie_{C}).

Une fois ce raccordement de câbles de transport électrique effectuée, la quantité d'énergie électrique négociée peut alors être transportée (étape 130 de transport d'énergie électrique) du ou des équipements fournisseurs d'énergie électrique vers l'équipement demandeur d'énergie électrique, au moyen des câbles dédiés au transport d'énergie électrique. Ici, 30 W d'énergie électrique sont ainsi transmis de l'installation B vers l'installation A, via par les câbles Ie_{B} et Ie_{A}, tandis que 20 W d'énergie électrique sont transmis de l'installation C vers l'installation A, via les câbles Ie_{C} et Ie_{A}, ce transport d'électricité ayant lieu entre 19h et 22h comme négocié lors de la phase de négociation.

En cas de raccordement simultané des câbles Ie_{A},Ie_{B} et Ie_{C}, le commutateur peut être pourvu d'une fonction qui bloque le transfert d'énergie de Ie_{B} vers Ie_{C} (ou l'inverse), afin de préserver l'intégralité de l'énergie demandée par l'installation demandeuse A.

On se réfère maintenant à la **figure 3** qui illustre un système de livraison négociée d'énergie électrique selon un deuxième mode de réalisation de l'invention, dans lequel un réseau de télécommunications est utilisé aussi bien pour la négociation de ressources électriques entre installations que pour la livraison d'énergie électrique proprement dite.

Ce système se distingue du précédent en ce que l'énergie électrique négociée entre installations est transportée par le réseau de télécommunications NET. Les câbles Ie_{A} à Ie_{C} servant à transporter l'électricité sont alors des lignes de transmission traditionnelles (e.g. une paire de cuivre) capables de supporter des courants électriques à des tensions électriques de l'ordre de 50 à 60 V. A titre d'exemple, ce type de ligne de transmission, implémentée sous la forme d'une paire de cuivre de 4/10 mm de diamètre, est capable de fournir des quantités d'électricité de l'ordre de 13 W, à 100 m de distance, avec une tension injectée de 60 V.

Ces lignes de transmission Ie_{A} à Ie_{C} sont typiquement appariées avec les lignes de transmission It_{A} à It_{C}, dédiées elles à la signalisation, au sein de câbles de télécommunications C_{A} à C_{C}, dits « multi-lignes» (par exemple, les câbles d'une boucle locale xDSL), reliant univoquement chaque installation à l'équipement de connexion EC.

Il peut être en outre approprié de placer une ou plusieurs batteries de stockage électrique dans les systèmes électriques ELEC_{A},...,ELEC_{C} connectés à ces lignes Ie_{A} à Ie_{C}, afin de permettre la livraison et le stockage de la quantité d'énergie ainsi négociée.

Comme le réseau de télécommunications NET lui-même est employé pour le transport d'électricité, l'équipement de connexion EC dans lequel est situé le commutateur COM peut alors être le point de concentration PC d'une boucle locale de télécommunications, un sous-répartiteur du réseau NET, voire un répartiteur du réseau NET, en fonction du nombre d'abonnés auxquels l'opérateur du réseau NET souhaite offrir ce service de livraison décentralisée d'électricité.

L'équipement EC comprend alors un élément séparateur SEP auquel les câbles C_{A} à C_{C} sont connectés, permettant de séparer, d'un côté, les lignes It_{A} à It_{C} et, de l'autre côté, les lignes Ie_{A} à Ie_{C}. Les lignes It_{A} à It_{C} sont alors connectées, par un élément répartiteur REP situé au sein de l'équipement EC, à une ligne It elle-même connectée au cœur de réseau IMS du réseau NET, afin de router les messages de signalisations entre installation vers l'équipement de contrôle de signalisation CSCF. Les lignes Ie_{A} à Ie_{C} sont, pour leur part, reliées au commutateur COM afin de pouvoir être raccordées entre elles comme décrit précédemment.

Sur la figure 3, contrairement à la figure 1, c'est l'équipement de connexion EC lui-même qui intercepte les réponses positives « 200 OK » des installations fournisseuses et raccorde les lignes Ie_{A} à Ie_{C} entre elles, en fonction de ces réponses. A ce titre, l'équipement EC ne présente pas nécessairement d'interface de communication INT mais intègre directement le module de contrôle CONT, en aval de l'élément répartiteur REP par rapport à l'équipement CSCF, ce module CONT interceptant les messages de réponse positives « 200 OK », émis par les équipements gestionnaires électriques EGE_{B} ou EGE_{C}, et contrôlant le commutateur en fonction du contenu de ces messages. Alternativement, l'équipement EC peut comprendre une interface de communication INT afin de recevoir une requête de basculement *req_COM* émise par l'équipement gestionnaire électrique EGE_{A} lorsqu'il considère qu'une offre de livraison est acceptable, similairement à ce qui est décrit précédemment.

On se réfère maintenant à la **figure 4** qui illustre un système alternatif de livraison négociée d'énergie électrique selon le deuxième mode de réalisation de l'invention dans lequel un unique réseau est utilisé aussi bien pour la négociation de ressources électriques entre installations que pour la livraison d'énergie électrique proprement dite.

Dans ce système alternatif, les installations A à C ne sont pas reliées par un câble « multi-lignes » à l'équipement de connexion EC, mais par une seule ligne de transmission (i.e. un câble « mono-ligne ») qui sert à la fois à transporter l'électricité et transmettre les messages de négociations.

Une telle ligne « multi-fonctions » peut ainsi être une ligne de transmission d'un réseau de télécommunications employant la technologie PoE (« Power on Ethernet ») qui utilise un filtre combineur (« injector ») en entrée de ligne pour superposer les deux types de signaux (électrique et de transmission de données) sur une même ligne de transmission et un filtre séparateur (« splitter ») en sortie de ligne pour séparer ces deux signaux. C'est alors la boucle locale de ce réseau de télécommunications qui est adaptée pour transporter de l'électricité.

Alternativement, cette ligne « multi-fonctions » peut être un câble de transport électrique d'un réseau de distribution électrique sur lequel on transmet des données, par exemple en employant la technologie PLC (« Power Line Coupling ») de couplage par porteur de ligne. C'est alors la boucle locale du réseau de distribution électrique qui est adaptée pour gérer tout ou partie de la négociation entre installations.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, on comprendra que les messages de signalisation n'utilisent pas nécessairement le seul protocole SIP, mais peuvent aussi être conformes à un autre protocole de signalisation tel que le protocole H.248, voire le protocole OpenFlow. Similairement, un réseau de télécommunication avec un cœur de réseau de type IMS a été décrit, mais d'autres types de technologies, de type Web notamment, peuvent être employées.

## Revendications

1. Procédé de fourniture d'énergie électrique au moyen d'un équipement de commutation (COM) connecté à une pluralité d'installations (A,B,C) par l'intermédiaire de câbles aptes à transporter de l'énergie électrique (Ie_{A},Ie_{B},Ie_{C}), le procédé comprenant les étapes suivantes :
raccorder (120) un desdits câbles (Ie_{A}), connecté à une desdites installations dite demandeuse (A), à au moins un autre desdits câbles (Ie_{B},Ie_{C}), connecté à au moins une autre desdites installations dite fournisseuse (B,C), au moyen de l'équipement de commutation, en fonction d'au moins un message de négociation, échangé entre des équipements gestionnaires d'énergie (EGE_{A},EGE_{B}) installés dans lesdites installations demandeuse et fournisseuse ; et
transporter (130) une quantité d'énergie électrique, de ladite au moins une installation fournisseuse vers l'installation demandeuse, par l'intermédiaire des câbles raccordés au moyen de l'équipement de commutation, **caractérisé en ce que** le message de négociation est conforme au protocole Session initiation Protocol SIP.

2. Procédé selon la revendication 1, dans lequel le message de négociation est un message de réponse (200 OK) de ladite au moins une installation fournisseuse à une requête de fourniture d'électricité (INVITE) émanant de l'installation demandeuse, le procédé comprenant en outre :
intercepter, dans un module de contrôle (CONT), le message de réponse ;
lorsque ce message de réponse est positif, déclencher le raccordement des câbles connectés à l'installation demandeuse et l'installation fournisseuse.

3. Procédé selon la revendication 2, dans lequel le module de contrôle (CONT) est situé dans un réseau de télécommunications (TEL), le procédé comprenant en outre, suite à l'interception du message de réponse et lorsque ledit message de réponse est positif, l'envoi par l'équipement de contrôle de signalisation d'une requête de commutation (req_COM) vers l'équipement de commutation afin de déclencher le raccordement des câbles connectés à l'installation demandeuse et l'installation fournisseuse.

4. Procédé selon la revendication 2, dans lequel le module de contrôle (CONT) et l'équipement de commutation (COM) sont intégrés dans un équipement de connexion (EC), le procédé comprenant en outre, suite à l'interception du message de réponse et lorsque ledit message de réponse est positif, le contrôle de l'équipement de commutation par le module de contrôle en fonction du message de réponse positif, afin de déclencher le raccordement des câbles connectés à l'installation demandeuse et l'installation fournisseuse.

5. Procédé selon l'une des revendications 1 à 4, dans lequel le message de négociation est une requête de commutation, émis par l'équipement gestionnaire électrique (EGE_{A}) de l'installation demandeuse (A) après avoir reçu un message de réponse positif (200 OK) d'au moins une installation fournisseuse à une requête de fourniture d'électricité (INVITE) de l'installation demandeuse, le procédé comprenant l'envoi de la requête de commutation, de l'installation demandeuse vers l'équipement de commutation, afin de déclencher le raccordement des câbles connectés à l'installation demandeuse et l'installation fournisseuse.

6. Equipement de connexion (EC) apte à être connecté à une pluralité de câbles, respectivement aptes à transporter de l'énergie électrique vers une installation, comprenant un commutateur (COM) connecté auxdits câbles, ledit commutateur étant configuré pour raccorder un desdits câbles (IeA), connecté à une installation dite demandeuse (A), à au moins un autre desdits câbles (IeB,IeC), connecté à au moins une installation dite fournisseuse (B,C), en fonction d'au moins un message de négociation, échangé entre des équipements gestionnaires d'énergie installés dans lesdites installations demandeuse et frounisseuse, **caractérisé en ce que** le message de négociation est conforme au protocole Session Initiation Protocol SIP.

7. Equipement de connexion selon la revendication 6, comprenant en outre une interface de communication (INT) apte à recevoir une requête de commutation (req_COM), générée en fonction dudit message de négociation, et configurée pour contrôler le commutateur en fonction de ladite requête de commutation de sorte à raccorder les câbles connectés auxdites installations demandeuse et fournisseuse.

8. Equipement de connexion selon la revendication 6 ou 7, comprenant en outre un module de contrôle (CONT) apte à intercepter ledit au moins un message de négociation et configuré pour contrôler le commutateur en fonction dudit message de négociation de sorte à raccorder les câbles connectés auxdites installations demandeuse et fournisseuse.

9. Système de livraison d'énergie électrique comprenant :
une pluralité d'installations (A,B,C) comprenant une installation, dite demandeuse (A), et au moins une autre installation, dite fournisseuse (B), lesdites installations comprenant chacune un équipement gestionnaire d'énergie, apte à échanger au moins un message de négociation d'énergie électrique avec un autre équipement gestionnaire d'énergie ;
un équipement de connexion (EC) selon l'une des revendications 6 à 8, connecté respectivement à chacune desdites installations par l'intermédiaire de câbles (Ie_{A},Ie_{B},Ie_{C}) aptes à transporter de l'énergie électrique.

10. Système de livraison d'énergie électrique selon la revendication 9, comprenant en outre une pluralité de lignes de transmission (It_{A},It_{B},It_{C}) connectant respectivement les équipements gestionnaires d'énergie à un équipement de contrôle de signalisation (CSCF) configuré pour gérer l'échange de messages de signalisation entre lesdits équipement gestionnaires d'énergie.

11. Système de livraison d'énergie électrique selon la revendication 9, dans lequel lesdits câbles aptes à transporter de l'énergie électrique sont des lignes de transmission appariées dans un réseau de télécommunications avec les lignes de transmission connectant les équipements gestionnaires d'énergie à l'équipement de contrôle de signalisation.

12. Système de livraison d'énergie électrique selon la revendication 9, dans lequel lesdits câbles aptes à transporter de l'énergie électrique sont en outre aptes à transmettre ledit au moins un message de négociation entre les équipements gestionnaires d'énergie desdites installations demandeuse et fournisseuse.

13. Système de livraison d'énergie électrique selon la revendication 12, dans lequel lesdits câbles, aptes à transporter de l'énergie électrique et à transmettre ledit au moins un message de négociation, sont des lignes de transmission d'un réseau de télécommunications.

## Patentansprüche

1. Verfahren zur Lieferung elektrischer Energie mittels einer Schalteinrichtung (COM), die mit mehreren Anlagen (A, B, C) über Kabel (Ie_{A}, Ie_{B}, Ie_{C}) verbunden ist, die geeignet sind, elektrische Energie zu transportieren, wobei das Verfahren die folgenden Schritte umfasst:
Anschließen (120) eines der Kabel (Ie_{A}), das mit einer der Anlagen, anfordernde Anlage (A) genannt, verbunden ist, an wenigstens ein anderes der Kabel (Ie_{B}, Ie_{C}), das mit wenigstens einer anderen der Anlagen, liefernde Anlage (B, C) genannt, verbunden ist, mittels der Schalteinrichtung in Abhängigkeit von wenigstens einer Verhandlungsnachricht, die zwischen Energieverwaltungseinrichtungen (EGE_{A}, EGE_{B}) ausgetauscht wird, die in der anfordernden und der liefernden Anlage installiert sind; und
Transportieren (130) einer Menge an elektrischer Energie von der wenigstens einen liefernden Anlage zu der anfordernden Anlage über Kabel, die mittels der Schalteinrichtung angeschlossen sind, **dadurch gekennzeichnet, dass** die Verhandlungsnachricht mit dem Protokoll Session Initiation Protocol, SIP, konform ist.

2. Verfahren nach Anspruch 1, wobei die Verhandlungsnachricht eine Antwortnachricht (200 OK) der wenigstens einen liefernden Anlage auf eine von der anfordernden Anlage kommende Anforderung zur Lieferung von Elektrizität (INVITE) ist, wobei das Verfahren außerdem umfasst:
Abfangen, in einem Steuerungsmodul (CONT), der Antwortnachricht;
wenn diese Antwortnachricht positiv ist, Auslösen der Verbindungsherstellung der Kabel, die mit der anfordernden Anlage und der liefernden Anlage verbunden sind.

3. Verfahren nach Anspruch 2, wobei sich das Steuerungsmodul (CONT) in einem Telekommunikationsnetz (TEL) befindet, wobei das Verfahren außerdem, im Anschluss an das Abfangen der Antwortnachricht und wenn die Antwortnachricht positiv ist, das Senden, durch die Signalisierungssteuereinrichtung, einer Schaltanforderung (req_COM) an die Schalteinrichtung umfasst, um die Verbindungsherstellung der Kabel, die mit der anfordernden Anlage und der liefernden Anlage verbunden sind, auszulösen.

4. Verfahren nach Anspruch 2, wobei das Steuerungsmodul (CONT) und die Schalteinrichtung (COM) in eine Verbindungseinrichtung (EC) integriert sind, wobei das Verfahren außerdem, im Anschluss an das Abfangen der Antwortnachricht und wenn die Antwortnachricht positiv ist, die Steuerung der Schalteinrichtung durch das Steuerungsmodul in Abhängigkeit von der positiven Antwortnachricht umfasst, um die Verbindungsherstellung der Kabel, die mit der anfordernden Anlage und der liefernden Anlage verbunden sind, auszulösen.

5. Verfahren nach einem der Ansprüche 1 bis 4, wobei die Verhandlungsnachricht eine Schaltanforderung ist, die von der Energieverwaltungseinrichtung (EGE_{A}) der anfordernden Anlage (A) gesendet wird, nachdem sie eine positive Antwortnachricht (200 OK) wenigstens einen liefernden Anlage auf eine Anforderung zur Lieferung von Elektrizität (INVITE) der anfordernden Anlage empfangen hat, wobei das Verfahren das Senden der Schaltanforderung von der anfordernden Anlage an die Schalteinrichtung umfasst, um die Verbindungsherstellung der Kabel, die mit der anfordernden Anlage und der liefernden Anlage verbunden sind, auszulösen.

6. Verbindungseinrichtung (EC), welche mit mehreren Kabeln verbindbar ist, die jeweils geeignet sind, elektrische Energie zu einer Anlage zu transportieren, und welche einen Umschalter (COM) umfasst, der mit den Kabeln verbunden ist, wobei der Umschalter dafür ausgelegt ist, eines der Kabel (IeA), das mit einer sogenannten anfordernden Anlage (A) verbunden ist, an wenigstens ein anderes der Kabel (IeB, IeC), das mit wenigstens einer sogenannten liefernden Anlage (B, C) verbunden ist, in Abhängigkeit von wenigstens einer Verhandlungsnachricht anzuschließen, die zwischen Energieverwaltungseinrichtungen ausgetauscht wird, die in der anfordernden und der liefernden Anlage installiert sind, **dadurch gekennzeichnet, dass** die Verhandlungsnachricht mit dem Protokoll Session Initiation Protocol, SIP, konform ist.

7. Verbindungseinrichtung nach Anspruch 6, welche außerdem eine Kommunikationsschnittstelle (INT) umfasst, die geeignet ist, eine Schaltanforderung (req_COM) zu empfangen, die in Abhängigkeit von der Verhandlungsnachricht erzeugt wird, und dafür ausgelegt ist, den Umschalter in Abhängigkeit von der Schaltanforderung so zu steuern, dass eine Verbindung der Kabel hergestellt wird, die mit der anfordernden und der liefernden Anlage verbunden sind.

8. Verbindungseinrichtung nach Anspruch 6 oder 7, welche außerdem ein Steuerungsmodul (CONT) umfasst, das geeignet ist, die wenigstens eine Verhandlungsnachricht abzufangen, und dafür ausgelegt ist, den Umschalter in Abhängigkeit von der Verhandlungsnachricht so zu steuern, dass eine Verbindung der Kabel hergestellt wird, die mit der anfordernden und der liefernden Anlage verbunden sind.

9. System zur Lieferung elektrischer Energie, welches umfasst:
mehrere Anlagen (A, B, C), die eine sogenannte anfordernde Anlage (A) und wenigstens eine weitere, sogenannte liefernde Anlage (B) umfassen, wobei die Anlagen jeweils eine Energieverwaltungseinrichtung umfassen, die geeignet ist, wenigstens eine Verhandlungsnachricht über elektrische Energie mit einer anderen Energieverwaltungseinrichtung auszutauschen;
eine Verbindungseinrichtung (EC) nach einem der Ansprüche 6 bis 8, die mit jeder der Anlagen jeweils über ein Kabel (Ie_{A}, Ie_{B}, Ie_{C}) verbunden ist, das geeignet ist, elektrische Energie zu transportieren.

10. System zur Lieferung elektrischer Energie nach Anspruch 9, welches außerdem mehrere Übertragungsleitungen (It_{A}, It_{B}, Itc) umfasst, die jeweils eine der Energieverwaltungseinrichtungen mit einer Signalisierungssteuereinrichtung (CSCF) verbinden, die dafür ausgelegt ist, den Austausch von Signalisierungsnachrichten zwischen den Energieverwaltungseinrichtungen zu verwalten.

11. System zur Lieferung elektrischer Energie nach Anspruch 9, wobei die Kabel, die geeignet sind, elektrische Energie zu transportieren, Übertragungsleitungen sind, die in einem Telekommunikationsnetz mit den Übertragungsleitungen gepaart sind, welche die Energieverwaltungseinrichtungen mit der Signalisierungssteuereinrichtung verbinden.

12. System zur Lieferung elektrischer Energie nach Anspruch 9, wobei die Kabel, die geeignet sind, elektrische Energie zu transportieren, außerdem geeignet sind, die wenigstens eine Verhandlungsnachricht zwischen den Energieverwaltungseinrichtungen der anfordernden und der liefernden Anlage zu übertragen.

13. System zur Lieferung elektrischer Energie nach Anspruch 12, wobei die Kabel, die geeignet sind, elektrische Energie zu transportieren und die wenigstens eine Verhandlungsnachricht zu übertragen, Übertragungsleitungen eines Telekommunikationsnetzes sind.

## Claims

1. Method for supplying electrical energy by means of a switching device (COM) connected to a plurality of installations (A,B,C) by way of cables able to transport electrical energy (Ie_{A}, Ie_{B}, Ie_{C}) , the method comprising the following steps:
coupling (120) one of said cables (Ie_{A}), connected to one of said installations termed a demander (A), to at least one other of said cables (Ie_{B}, Ie_{C}), connected to at least one other of said installations termed a supplier (B,C), by means of the switching device, as a function of at least one negotiation message exchanged between energy manager devices (EGE_{A}, EGE_{B}) installed in said demander and supplier installations; and
transporting (130) a quantity of electrical energy, from said at least one supplier installation to the demander installation, by way of the cables coupled by means of the switching device, **characterized in that** the negotiation message is in accordance with the Session Initiation Protocol SIP.

2. Method according to Claim 1, wherein the negotiation message is a response message (200 OK) of said at least one supplier installation to an electricity supply request (INVITE) emanating from the demander installation, the method furthermore comprising:
intercepting, in a control module (CONT), the response message;
when this response message is positive, triggering the coupling of the cables connected to the demander installation and supplier installation.

3. Method according to Claim 2, wherein the control module (CONT) is situated in a telecommunications network (TEL), the method furthermore comprising, subsequent to the interception of the response message and when said response message is positive, the dispatch by the signalling control device of a switching request (req_COM) to the switching device so as to trigger the coupling of the cables connected to the demander installation and supplier installation.

4. Method according to Claim 2, wherein the control module (CONT) and the switching device (COM) are integrated into a connection device (EC), the method furthermore comprising, subsequent to the interception of the response message and when said response message is positive, the control of the switching device by the control module as a function of the positive response message, so as to trigger the coupling of the cables connected to the demander installation and supplier installation.

5. Method according to one of Claims 1 to 4, wherein the negotiation message is a switching request, sent by the electrical manager device (EGE_{A}) of the demander installation (A) after having received a positive response message (200 OK) of at least one supplier installation to an electricity supply request (INVITE) of the demander installation, the method comprising the dispatch of the switching request, from the demander installation to the switching device, so as to trigger the coupling of the cables connected to the demander installation and supplier installation.

6. Connection device (EC) able to be connected to a plurality of cables, respectively able to transport electrical energy to an installation, comprising a switch (COM) connected to said cables, said switch being configured to couple one of said cables (IeA), connected to a so-called demander installation (A), to at least one other of said cables (IeB,IeC), connected to at least one so-called supplier installation (B,C), as a function of at least one negotiation message exchanged between energy manager devices installed in said demander and supplier installations, **characterized in that** the negotiation message is in accordance with the Session Initiation Protocol SIP.

7. Connection device according to Claim 6, furthermore comprising a communication interface (INT) able to receive a switching request (req_COM), generated as a function of said negotiation message, and configured to control the switch as a function of said switching request so as to couple the cables connected to said demander and supplier installations.

8. Connection device according to Claim 6 or 7, furthermore comprising a control module (CONT) able to intercept said at least one negotiation message and configured to control the switch as a function of said negotiation message so as to couple the cables connected to said demander and supplier installations.

9. Electrical energy delivery system comprising:
a plurality of installations (A,B,C) comprising an installation, termed a demander (A), and at least one other installation, termed a supplier (B), said installations each comprising an energy manager device, able to exchange at least one electrical energy negotiation message with another energy manager device;
a connection device (EC) according to one of Claims 6 to 8, connected respectively to each of said installations by way of cables (Ie_{A}, Ie_{B}, Ie_{C}) able to transport electrical energy.

10. Electrical energy delivery system according to Claim 9, furthermore comprising a plurality of transmission lines (It_{A}, It_{B}, It_{C}) respectively connecting the energy manager devices to a signalling control device (CSCF) configured to manage the exchange of signalling messages between said energy manager device.

11. Electrical energy delivery system according to Claim 9, wherein said cables able to transport electrical energy are transmission lines paired in a telecommunications network with the transmission lines connecting the energy manager devices to the signalling control device.

12. Electrical energy delivery system according to Claim 9, wherein said cables able to transport electrical energy are furthermore able to transmit said at least one negotiation message between the energy manager devices of said demander and supplier installations.

13. Electrical energy delivery system according to Claim 12, wherein said cables, able to transport electrical energy and to transmit said at least one negotiation message, are transmission lines of a telecommunications network.
